# EUROPEAN PATENT APPLICATION

(11) **EP 4 848 214 A1**
(43) Date of publication of application: **02.12.2026**
(21) Application number: 25797656.3
(22) Date of filing: 23.04.2025
(51) Int. Cl.: G06T 11/60, G06T 7/10, G06T 5/70, G06F 40/279, G06N 3/0475, G06T 3/10, G06T 5/60

(54) **IMAGE EDITING METHOD AND ELECTRONIC DEVICE FOR PERFORMING METHOD**

(30) Priority: 29.04.2024 KR 20240057204; 24.10.2024 KR 20240146974
(71) Applicant: Samsung Electronics Co., Ltd., Suwon-si, Gyeonggi-do 16677 (KR)
(72) Inventor: SONG, Juyong, Suwon-si, Gyeonggi-do 16677 (KR); KIM, Somin, Suwon-si, Gyeonggi-do 16677 (KR); SHIN, Hyeji, Suwon-si, Gyeonggi-do 16677 (KR); CHOI, Saemi, Suwon-si, Gyeonggi-do 16677 (KR); KWON, Jungmin, Suwon-si, Gyeonggi-do 16677 (KR); YEO, Haedong, Suwon-si, Gyeonggi-do 16677 (KR)
(74) Representative: Gulde & Partner
(86) International application number: PCT/KR2025/005503
(87) International publication number: WO 2025/230218

(57) **Abstract**

Provided is a method, performed by an electronic device, of editing an image. The method may include obtaining an image, obtaining an edit prompt for the image, generating an edited image by using a diffusion model that uses the image and the edit prompt as input data, and outputting the edited image. The generating of the edited image may include applying different image generation strengths to a plurality of regions in the image, based on a segmentation map representing the plurality of regions.

## Description

### Technical Field

The disclosure relates to a method of editing and generating an image, and an electronic device and a server, for performing the method.

### Background Art

Generative AI is a technology that learns structures and patterns from large-scale datasets and generates new synthetic data based on input data. The generative AI produces human-level results for a variety of tasks involving text, images, voice, video, music, etc. For example, an image generative model generates new images based on given data (e.g., text, images, etc.).

However, in the case of using a generative model in generating an image, there is a problem in that the processing speed of image generation is increased when a probabilistic process is performed individually for each region of the image in order to apply different generation strengths to each region.

### Disclosure of Invention

### Solution to Problem

According to an aspect of the disclosure, a method, performed by an electronic device, of editing an image may be provided. The method may include obtaining an image. The method may include obtaining an edit prompt for the image. The method may include generating an edited image by using a diffusion model that takes the image and the edit prompt as input data. The method may include outputting the edited image. The generating of the edited image may include applying different image generation strengths to a plurality of regions in the image, based on a segmentation map representing the plurality of regions.

According to an aspect of the disclosure, an electronic device for editing an image may be provided. The electronic device may include a communication interface, at least one processor, and a memory storing instructions. The instructions, when executed by the at least one processor, may be configured to cause the electronic device to obtain an image. The instructions , when executed by the at least one processor, may be configured to cause the electronic device to obtain an edit prompt for the image. The instructions, when executed by the at least one processor, may be configured to cause the electronic device to generate an edited image by using a diffusion model that takes the image and the edit prompt as input data. The instructions, when executed by the at least one processor, may be configured to cause the electronic device to output the edited image. The generating of the edited image may include applying different image generation strengths to a plurality of regions in the image, based on a segmentation map representing the plurality of regions.

According to an aspect of the disclosure, a method, performed by a server, of editing an image may be provided. The method may include obtaining an image. The method may include obtaining an edit prompt for the image. The method may include generating an edited image by using a diffusion model that takes the image and the edit prompt as input data. The method may include outputting the edited image. The generating of the edited image may include applying different image generation strengths to a plurality of regions in the image, based on a segmentation map representing the plurality of regions.

According to an aspect of the disclosure, a server for editing an image may be provided. The server may include a communication interface, at least one processor, and a memory storing instructions. The instructions, when executed by the at least one processor, may be configured to cause the server to obtain an image. The instructions, when executed by the at least one processor, may be configured to cause the server to obtain an edit prompt for the image. The instructions, when executed by the at least one processor, may be configured to cause the server to generate an edited image by using a diffusion model that takes the image and the edit prompt as input data. The instructions, when executed by the at least one processor, may be configured to cause the server to output the edited image. The generating of the edited image may include applying different image generation strengths to a plurality of regions in the image, based on a segmentation map representing the plurality of regions.

According to an aspect of the disclosure, there may be provided a computer-readable recording medium having recorded thereon a program for executing any one of the methods, performed by an electronic device and/or a server, of generating and providing an edited image, as described above and below.

### Brief Description of Drawings

FIG. 1 is a diagram illustrating an example of image editing according to an embodiment of the disclosure.
FIG. 2 is a flowchart illustrating an operation in which an electronic device provides an edited image, according to an embodiment of the disclosure.
FIG. 3 is a diagram illustrating a diffusion model according to an embodiment of the disclosure.
FIG. 4A is a diagram illustrating an example in which an electronic device edits an image by using a diffusion model, according to an embodiment of the disclosure.
FIG. 4B is a diagram illustrating an operation in which an electronic device applies different scales to different regions in an image within a single time step.
FIG. 5 is a diagram illustrating an electronic device applying different image generation strengths to different regions, according to an embodiment of the disclosure.
FIG. 6 is a flowchart illustrating an overall process in which an electronic device generates an edited image, according to an embodiment of the disclosure.
FIG. 7 is a diagram illustrating an electronic device editing an image by applying different image generation strengths to a plurality of levels, according to an embodiment of the disclosure.
FIG. 8 is a diagram illustrating an electronic device editing an image by imposing a plurality of conditions.
FIG. 9 is a diagram illustrating an electronic device generating an image by using a diffusion model, according to an embodiment of the disclosure.
FIG. 10 is a block diagram of a configuration of an electronic device according to an embodiment of the disclosure.
FIG. 11 is a flowchart illustrating an electronic device operating in conjunction with a server, according to an embodiment of the disclosure.
FIG. 12 is a block diagram of a configuration of a server according to an embodiment of the disclosure.

### Mode for the Invention

Terms used in the present specification will now be briefly described and then the disclosure will be described in detail. Throughout the disclosure, the expression "at least one of a, b or c" indicates only a, only b, only c, both a and b, both a and c, both b and c, all of a, b, and c, or variations thereof.

The terms used in the disclosure may be general terms currently widely used in the art by taking into account functions described herein, but may vary according to an intention of a technician engaged in the art, precedent cases, advent of new technologies, etc. Furthermore, specific terms may be arbitrarily selected by the applicant, and in this case, the meaning of the selected terms will be described in detail in the relevant description. Thus, the terms used herein should be defined not by simple appellations thereof but based on the meaning of the terms together with the overall description of the disclosure.

Singular expressions used herein are intended to include plural expressions as well unless the context clearly indicates otherwise. All the terms used herein, which include technical or scientific terms, may have the same meaning that is generally understood by one of ordinary skill in the art. Furthermore, although the terms including an ordinal number such as "first", "second", etc. may be used herein to describe various elements or components, these elements or components should not be limited by the terms. The terms are only used to distinguish one element or component from another element or component.

Throughout the specification, when a part "includes" or "comprises" an element, unless there is a particular description contrary thereto, it is understood that the part may further include other elements, not excluding the other elements. In addition, terms such as "unit", "module", etc., described herein refer to a unit for processing at least one function or operation and may be implemented as hardware or software, or a combination of hardware and software.

An embodiment of the disclosure will be described more fully below with reference to the accompanying drawings so that the embodiment thereof may be easily implemented by one of ordinary skill in the art. However, the disclosure may be implemented in many different forms and should not be construed as being limited to an embodiment of the disclosure set forth herein. Furthermore, parts not related to the descriptions are omitted to clearly illustrate the disclosure in the drawings, and like reference numerals denote like elements throughout.

Below, the disclosure is described in detail with reference to the accompanying drawings.

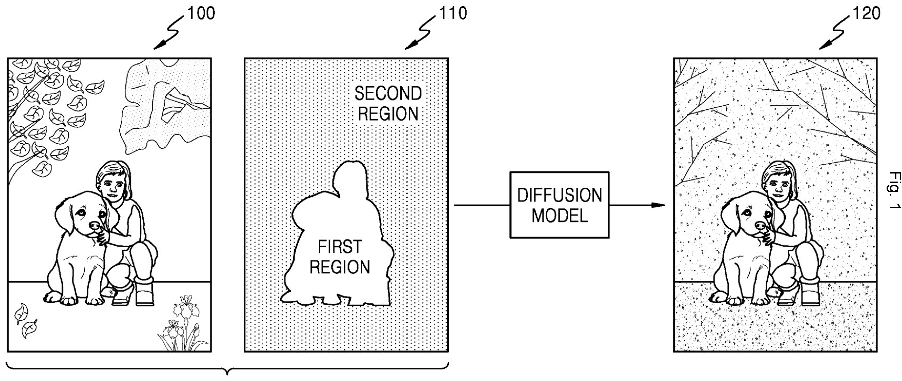

FIG. 1 is a diagram illustrating an example of image editing according to an embodiment of the disclosure.

In an embodiment of the disclosure, an electronic device may provide a user with a function of editing an image by using a diffusion model. The diffusion model may be a generative artificial intelligence (AI) model using a diffusion process. The diffusion model may be trained through a forward diffusion process that gradually adds noise and a reverse diffusion process that predicts and removes noise, and the trained diffusion model may generate initial noise, and generate a new image through a reverse diffusion process that predicts and removes noise starting from the initial noise. In this case, the diffusion model may generate an image by referring to input data (e.g., an image, text).

The electronic device may generate an edited image 120, based on an input image 100 and an edit prompt, by using a generative model, and provide the edited image 120 to the user. The edit prompt may be text indicating instructions or commands for editing the image.

An image editing operation in which the electronic device generates the edited image 120 aims to sufficiently reflect the edit prompt for editing the image while maintaining the identity of the input image 100. Maintaining the identity of the input image 100 may mean that the degree of translation from the input image 100 is small, and thus may be applied to some region (e.g., an object region) of the input image 100, and sufficiently reflecting the edit prompt may mean that the degree of translation from the input image 100 is sufficiently large to correspond to the edit prompt, and thus may be applied to another region (e.g., a background region) of the input image 100. In this case, maintaining the identity of a specific region does not absolutely mean that the region is not edited, but rather include a relative meaning that the region is less edited than other regions that are heavily edited in the image. Similarly, sufficiently reflecting the edit prompt has a relative meaning that a region being edited is edited more than other regions. In an embodiment of the disclosure, a degree to which the edit prompt is reflected in the input image 100 may be adjusted.

When generating the edited image 120 representing a result of the editing the input image 100 based on the edit prompt, the electronic device may apply different image generation strengths to a plurality of regions of the input image 100 based on a segmentation map 110. Furthermore, when generating an image by separating multiple regions in an image, the electronic device may reduce the processing time for image generation by processing different image region within a single diffusion process.

In the example of FIG. 1, a first region in the segmentation map 110 may represent objects, and a second region may represent a background. And, the edit prompt may be text instructing a modification to snowy weather. In this case, the electronic device may apply a relatively low image generation strength to the first region such that the identity of the objects in the first region is maintained, and may apply a relatively high image generation strength to the second region so that a background scene representing the second region is changed. In detail, in the edited image 120, background weather is edited to snowy weather, resulting in a different result than the background of the input image 100 that is an original image, but the objects, which are a person and a dog, remain unchanged or are changed slightly such that the identity of the objects in the original image may be maintained.

In addition, an example of image editing described throughout the disclosure is 'background editing'. In other words, background editing is described as, assuming that an input edit prompt is for editing a background, maintaining the identity of an object in an original image and editing the background to reflect the edit prompt, so that different image generation strengths are applied to a plurality of regions within the image.

Image editing as referred to in the disclosure is not limited to background editing. For example, an 'object editing' function may be provided by a technique described in the disclosure. Object editing may refer to, assuming that an input edit prompt is for editing an object, editing an object to reflect the edit prompt while maintaining the identity of the remaining region in an original image. In addition, for example, a 'free editing' function may be provided by a technique described in the disclosure. Free editing may refer to identifying an edit intent through natural language understanding of an input edit prompt, and applying different image generation strengths to a plurality of regions in an image. In other words, techniques of the disclosure for applying different generation strengths to different image regions within a single diffusion process when generating an image may be applied to any type of image editing.

The electronic device may be any one of various types of devices that generate and provide the edited image 120. For example, the electronic device may be implemented as any one of various types and forms of electronic devices including displays. Examples of the electronic device may include, but are not limited to, devices capable of displaying an image on a display, such as a smart TV, a smartphone, a tablet personal computer (PC), a laptop PC, an eyewear display, a head-mounted display (HMD), etc. In another example, the electronic device may be implemented as any one of various types and forms of electronic devices that are to be connected to a display by wire or wirelessly. For example, the electronic device may include, but is not limited to, devices that are connected to a display by wire or wirelessly and capable of displaying an image on the display, such as a set-top box, a desktop PC, a server, etc.

Specific operations in which the electronic device provides the edited image 120 to the user are described in more detail with reference to the following drawings and description thereof.

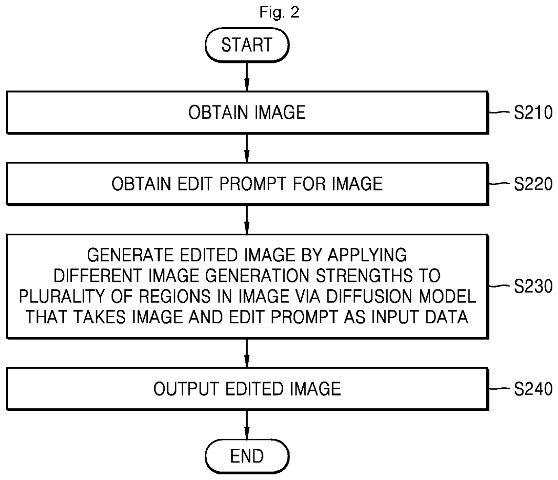

FIG. 2 is a flowchart illustrating an operation in which an electronic device provides an edited image, according to an embodiment of the disclosure.

Operations performed by the electronic device to generate and provide a synthetic image screen are briefly described with reference to FIG. 2, and a detailed description of each of the operations is described with reference to the following drawings.

In operation S210, the electronic device may obtain an image. The image may refer to original data used by the electronic device to generate a new image or to edit an image. The electronic device may perform an image editing task by using a diffusion model. The image may be used as input data when the diffusion model performs the task.

In an embodiment of the disclosure, the electronic device may provide an image loading function that allows a user to select one of the images stored in an internal storage. For example, the electronic device may allow the user to select a desired image from a gallery or to browse through a corresponding folder in the storage to select an image. The images stored in the electronic device may be images captured by a camera of the electronic device, or may include images obtained from various sources, such as images downloaded from the Internet, images transmitted from other devices, etc.

In an embodiment of the disclosure, the electronic device may obtain images in real time by using the camera. For example, when a camera function is executed on the electronic device and the user of the electronic device captures an image of a specific scene, the image may be stored in the electronic device and used for image editing.

In an embodiment of the disclosure, the electronic device may receive images from external sources. For example, the user of the electronic device may download images that are in a public domain via the Internet, or receive images from another user (e.g., another user's electronic device and/or other devices (e.g., a camera, scanner, etc.)).

The "image", which is data used as an input to the diffusion model, may be replaced with and referred to as various other terms representing the same/similar concept. For example, the term "image" may be replaced with other terms such as "original image", "reference image", "default image", "initial image", "input image", etc., but is not limited thereto.

In operation S220, the electronic device may obtain an edit prompt for the image.

The edit prompt may refer to an input for the diffusion model to perform an operation of editing or generating the image. The edit prompt may include a description of how the diffusion model is to edit and generate the image. For example, the edit prompt may be text such as "Make it snowy," indicating a description of image editing, and the diffusion model may generate an image so that the output image corresponds to the description of the editing. The edit prompt may include one or more words and/or one or more sentences. The edit prompt may be obtained via text input or speech input.

In an embodiment of the disclosure, the electronic device may receive a user input for inputting an edit prompt. For example, the electronic device may receive text input from the user.For example, the electronic device may receive speech input from the user. The electronic device may convert the speech input from the user into text by using Automatic Speech Recognition (ASR).

In an embodiment of the disclosure, the electronic device may provide a stored edit prompt. The electronic device may store, in the storage of the electronic device, a collection of texts representing edit prompts. For example, the electronic device may provide the user with various example sentences for an image editing task as selectable choices, and obtain an edit prompt selected based on a user input. For example, "Make it snowy," which is one of the example sentences, may be selected as an edit prompt. The electronic device may provide the user with various example images corresponding to image editing results as selectable choices, and obtain an edit prompt corresponding to an image selected based on a user input. For example, when an image with a snowy theme is selected from among the example images, the electronic device may obtain an edit prompt "Make it snowy" corresponding to the snowy image.

An "edit prompt" is data used as another input, in addition to the image data used as an input to the diffusion model. The term "edit prompt" may be replaced with and referred to as various other terms representing the same/similar concept. For example, the edit prompt may be replaced with other terms such as prompt, edit command, edit instruction, task command, task instruction, input text, etc., and is not limited thereto.

In operation S230, the electronic device may generate an edited image by using a diffusion model that takes the image and the edit prompt as input data. When generating the edited image, the electronic device may apply different image generation strengths to a plurality of regions in the image. Based on a segmentation map representing a plurality of regions in the image, the electronic device may apply different image generation strengths to the plurality of regions in the image. The electronic device may process, within a single diffusion process, the application of different image generation strengths to the plurality of regions in the image. An inference process of the diffusion model includes diffusion processes repeated at time steps, and a single diffusion process refers to a single process corresponding to one of the time steps. A diffusion process in the inference process may be a reverse diffusion process.

In an embodiment of the disclosure, a diffusion model may be an example of generative AI that processes input data to generate new data. The diffusion model may take at least one of text or an image as an input and generate and output an image.

The diffusion model may be implemented using various deep neural network architectures and algorithms adopting a diffusion process, or through modifications thereof. The diffusion model may refer to a model that learn the features of an image through a forward diffusion process that involves adding noise to an original image at each time step, and a reverse diffusion process that involves reconstructing the original image by removing noise from an image with added noise at each time step.

In an embodiment of the disclosure, the diffusion model may be trained to perform a text-based image editing task such that the edit prompt is reflected in the image while maintaining image consistency. The image editing task may be included in an image generation task that generates a new image that is an edited version of the original image. Image consistency may mean that visual elements representing key features of the original image (e.g., image composition, mood, style, etc.) are maintained consistent even after the editing task is performed. For example, when the edit prompt is text "Make it snowy" for weather editing, the diffusion model edits the season in the image to winter. In this case, maintaining image consistency may mean that only visual elements representing the season (e.g., snow) are modified while maintaining shapes and positions of key objects included in the foreground, background, etc. within the image.

In an embodiment of the disclosure, the electronic device may apply different image generation strengths to the plurality of regions in the image. For example, the electronic device may distinguish between an object region and a remaining region within the image, and respectively apply different image generation strengths to the object region and the remaining region.

The electronic device may cause the edit prompt to be reflected in the object region of the image to a lesser degree than in the remaining region thereof. For example, within the edited image, an object may retain the identity of the object in the original image, while the background that is the remaining region may show a result of the editing (e.g., a snowy background) to be made different from that in the original image.

The electronic device may cause the edit prompt to be reflected in the object region of the image to a greater degree than in the remaining region thereof. For example, within the edited image, the object may show a result of the editing that is different from that in the original image, while the background that is the remaining region retains the identity of the background in the original image.

For example, the electronic device may apply a first image generation strength to the object region and a second image generation strength to the remaining region, thereby allowing different degrees of editing to be respectively applied to the regions during image generation.

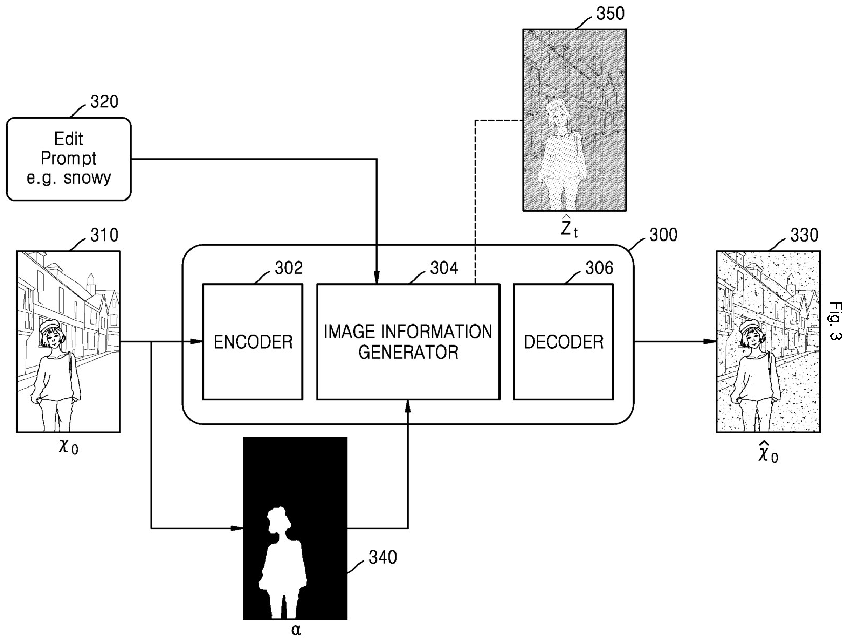

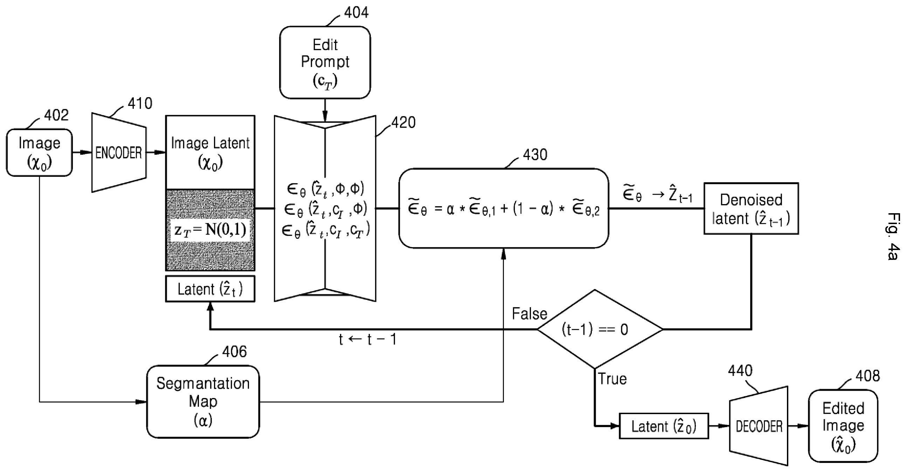

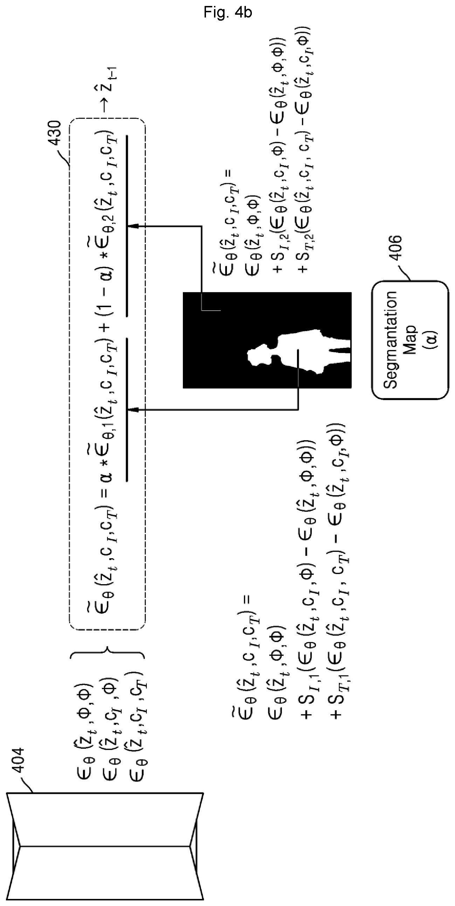

When generating the image by using the diffusion model, the electronic device may process the application of different image generation strengths to different regions within the image together within a single diffusion process. Accordingly, an efficient image editing task may be performed by reducing the overall processing speed of the image generation and/or editing process. A detailed description of the diffusion model of the disclosure is further provided in descriptions with respect to FIG. 3 and FIGS. 4A and 4B.

The term "edited image" may be replaced with and referred to as various other terms representing the same/similar concept. For example, the edited image may be replaced with other terms such as a generated image, a synthetic image, a translated image, a new image, etc., but is not limited thereto.

In operation S240, the electronic device may output the edited image.

In an embodiment of the disclosure, the electronic device may display the edited image on a screen via a display included in the electronic device.

In an embodiment of the disclosure, the electronic device may transmit the edited image to another electronic device including a display. The other electronic device that receives the edited image transmitted from the electronic device may display the edited image on a screen thereof.

FIG. 3 is a diagram illustrating a diffusion model according to an embodiment of the disclosure.

In an embodiment of the disclosure, the diffusion model 300 may include at least an encoder 302, an image information generator 304, and a decoder 306. The diffusion model 300 may take an input image 310 and an edit prompt 320 as an input and output an edited image 330. For example, when the input image 310 is a landscape image including a person, and the edit prompt 320 is text for editing to snowy weather, the edited image 330 may show a result of editing a background of the input image 310 to snowy weather.

When generating an image by using the diffusion model 300, the electronic device may apply different image generation strengths to a plurality of regions in the image. For example, the electronic device may cause the edit prompt 320 to be reflected in an object region of an input image 310 to a lesser degree than in the remaining region, so that the identity of an object is maintained in the edited image 330. The plurality of regions within the image may be identified based on a segmentation map 340. The electronic device may cause different image generation strengths to be respectively reflected in the plurality of regions within the image, such as in a manner in which the object within the image is edited and the background is preserved, or in a manner in which the object and background within the image are respectively edited to different degrees.

The encoder 302 may function to convert the input image 310 into a form of data (e.g., a feature vector) that is processible by the diffusion model 300, and the decoder 306 may function to convert data processed by the diffusion model 300 into the edited image 330 that is a final output. The encoder 302 and the decoder 306 may be implemented using a neural network architecture for compressing and reconstructing data, or through a modification to the neural network architecture. The encoder 302 and the decoder 306 may be implemented based on a variational autoencoder (VAE) architecture, but are not limited thereto. **In** addition, the encoder 302 and the decoder 306 may include convolutional neural networks (CNNs) for processing image data.

The image information generator 304 may function to enable the diffusion model 300 to learn and infer image information by processing a forward diffusion process and a reverse diffusion process of the diffusion model 300. The image information generator 304 may generate initial noise, and generate a final image by repeating noise prediction and noise removal at each time step, starting from the initial noise. At an intermediate time step in the noise prediction process, an intermediate vector for which noise prediction has been partially performed may be obtained, and when visualized, the intermediate vector may appear as an intermediate image 350. Finally, when the noise prediction is completed, the edited image 330, which is the final output, may be obtained by the decoder 306.

The image information generator 304 may be implemented using a neural network architecture for inferring an image by predicting and removing noise, or through a modification to the neural network architecture. For example, the image information generator 304 may be implemented based on a U-Net architecture, but is not limited thereto. The image information generator 304 may include an attention module that applies an attention mechanism (e.g., cross-attention) to merge feature vectors corresponding to at least one of the input image 310, the edit prompt 320, or the segmentation map 340 into images to which noise is added stepwise. For example, the image information generator 304 may include one or more cross-attention modules.

In an embodiment of the disclosure, the diffusion model 300 used by the electronic device may be an AI model trained to output the edited image 330 by taking the input image 310 and the edit prompt 320 as an input. The diffusion model 300 may be a model that has been trained and validated for performance and is ready to perform inference.

A training process of the diffusion model 300 is described. The training process of the diffusion model 300 may be performed by the electronic device or by another device (e.g., an external server).

To summarize the training process of the diffusion model 300, the features of an image are learned through a forward diffusion process that involves adding noise to the original image at each time step and a reverse diffusion process that involves reconstructing the original image by removing noise from a noisy image (or by denoising the noisy image) at each time step.

Training data for the diffusion model 300 may consist of image-text pairs. The diffusion model 300 may learn a translation process that involves converting an image into noise via deterministic inversion, which converts the same image in the same manner when converting the same original image into a noise space, and generating a new image that reflects a new condition by incorporating the new condition into the noise. Image translation means that, for example, based on an original image-prompt pair, the diffusion model 300 translates the original image into a new image according to a new image-prompt pair (condition).

In other words, conditioning may be applied to the training process of the diffusion model 300 according to the disclosure. For example, to generate the edited image 330 by referring to the input image 310 and the edit prompt 320, the diffusion model 300 may use image conditioning and text conditioning.

During the training process of the diffusion model 300, a classifier-free guidance (CFG) technique may be used to control a degree to which conditioning is applied. The degree to which conditioning is applied may also be referred to as an image generation strength. The CFG technique may guide image generation by the diffusion model 300 by adjusting a trade-off between a conditional likelihood, which is the probability of generating an image under a condition, and an unconditional likelihood, which is the probability of generating an image without a condition, during the training process of the diffusion model 300.

In an inference operation of the diffusion model 300 trained by applying the CFG technique, the degree to which a condition is reflected may be determined by a hyperparameter indicating the degree of condition reflection. For example, a degree to which the diffusion model 300 reflects an image condition may be controlled by a hyperparameter representing the degree to which the image condition is reflected, and a degree to which the diffusion model 300 reflects a text condition may be controlled by a hyperparameter representing the degree to which the text condition is reflected. A hyperparameter representing a degree of condition reflection may also be referred to as a guidance scale or a CFG scale.

In an embodiment of the disclosure, the diffusion model 300 may process the application of different condition reflection hyperparameters to different regions in the image within a single diffusion process. An example in which during an inference process in which the electronic device edits an image by using a diffusion model, different image generation strengths are applied to different regions of the image within a single diffusion process is further described with reference to FIGS. 4A and 4B.

FIG. 4A is a diagram illustrating an example in which an electronic device edits an image by using a diffusion model, according to an embodiment of the disclosure.

In describing FIG. 4A, an example in which the diffusion model processes data in a latent space by compressing the original data into a lower dimension is illustrated. However, this is only an example for convenience of description, and the diffusion model of the disclosure includes a diffusion model that processes data in a pixel space without converting the data into a latent space.

An inference process of the diffusion model is a process of generating a new image by using conditions (e.g., an image 402 and an edit prompt 404). The diffusion model may generate initial noise (e.g., initial latent data), and obtain a final image through a reverse diffusion process that iteratively predicts noise at each time step and removes the predicted noise, starting from the sampled initial noise.

The diffusion model may obtain an image 402 as input data. The image 402 may undergo certain preprocessing (e.g., resizing) in order to be used as input data for the diffusion model. The preprocessed image 402may be converted into image latent data by an encoder 410. The image latent data may be used as an image condition *c_{I}* in the inference process of the diffusion model.

The diffusion model may obtain the edit prompt 404 as input data. The edit prompt 404 may be converted into latent data for processing in the latent space of the diffusion model. The edit prompt 404 may be converted into text latent data by a text encoder (e.g., bidirectional encoder representations from transformers (BERT) or the like). The text latent data may be used as a text condition *c_{T}* in the inference process of the diffusion model.

The diffusion model may generate the initial latent data *z_{T}*. The initial latent data may be obtained by being sampled from a standard normal distribution N(0,1). Reverse diffusion processes, which are included in the inference process of the diffusion model, are a process of gradually removing noise over time steps from t=T to t=0. In other words, the initial latent data is *z_{T}*, and latent data at an arbitrary time step t between time steps from t=T to t=0 is *zₜ*.

The diffusion model may predict noise at each time step. At each time step, one diffusion process (reverse diffusion process) may be performed. The noise prediction may be performed by the image information generator 420. The image information generator 420 may be implemented based on a U-Net architecture for processing a noise prediction task, but is not limited thereto. The noise prediction may include conditional prediction and unconditional prediction. For example, noise predicted at time step t may be defined as follows. ${ϵ}_{θ} \left({\hat{z}}_{t}, ∅, ∅\right) , {ϵ}_{θ} \left({\hat{z}}_{t}, {c}_{I}, ∅\right) , {ϵ}_{θ} \left({\hat{z}}_{t}, {c}_{I}, {c}_{T}\right)$

Here, *ε_{θ}*(*ẑₜ,* 0̸, 0̸) is an unconditional prediction of noise, *ε_{θ}*(*ẑₜ, c_{I},* 0̸) is an image-conditional prediction of noise, and *ε_{θ}*(*ẑₜ, c_{I}, c_{T}*) is an image- and text-conditional prediction of noise. The diffusion model may combine a conditional prediction with an unconditional prediction. The strength of combining conditional and unconditional predictions may be adjusted by hyperparameters.

Noise predicted by the image information generator 420 is combined together by a CFG module 430 to obtain combined noise *ε̃_{θ}* at each time step t. Once the noise *ε̃_{θ}* is predicted at each time step t, the diffusion model may remove the noise *ε̃_{θ}* from the current latent data *zₜ* to thereby obtain latent data *z*_{*t*-1} at a next time step t-1.

The diffusion model may obtain final latent data *ẑ*₀ by repeating noise prediction and noise removal over time steps from t=T to t=0. The final latent data may be converted into an edited image 408 by a decoder 440.

In an embodiment of the disclosure, the electronic device may obtain a segmentation map 406 representing a plurality of regions within the image 402. For example, the electronic device may segment an object region within the image 402 to obtain the segmentation map 406 that is a representation of information that divides the image 402 into the object region and a remaining region (e.g., a background region). The electronic device may identify segments within the image 402 and obtain the segmentation map 406 by using an algorithm for segmentation (e.g., edge detection), or an AI-based segmentation technique.

In an embodiment of the disclosure, segment regions may be automatically determined using a segmentation algorithm. For example, the electronic device may classify objects in an image by using semantic segmentation. The semantic segmentation may distinguish between classes of key objects corresponding to a foreground (e.g., people, dogs, etc.) and background regions (e.g., sky, ground, trees, etc.).The electronic device may classify individual objects by using instance segmentation. For example, when there are multiple people in an image, each person may be distinguished as an individual instance.

In an embodiment of the disclosure, segment regions may be determined manually by a user input. For example, based on a user input (e.g., touch, click, etc.) for designating an object, background, etc., in an image, the electronic device may distinguish the foreground from the background according to a region designated via the user input.

Referring back to the operation of the CFG module 430, the diffusion model may apply different image generation strengths to regions in the image when predicting noise at each time step. Based on the segmentation map 406 representing the plurality of regions in the image, the diffusion model may respectively apply different image generation strengths to the regions in the image. This may be expressed via an equation below. ${{ϵ}^{˜}}_{θ} = α ∗ {{ϵ}^{˜}}_{θ , 1} + \left(1-α\right) ∗ {{ϵ}^{˜}}_{θ , 2}$

In the equation above, *α* represents the image segmentation map 406, *ε̃*_{*θ*,1} represents first noise corresponding to a first region, and *ε̃*_{*θ*,2} represents second noise corresponding to a second region. The segmentation map 406 may undergo certain preprocessing (e.g., resizing), so that it may be combined with the first noise or the second noise. Furthermore, in the equation above, the image segmentation map 406 *α* has a value of 1 or 0 for each pixel. For example, the more likely a pixel is to correspond to an object, the closer the value of the pixel is to 1, and the more likely a pixel is to correspond to a region (e.g., the background) other than the object, the closer the value of the pixel is to 0. According to the equation above, *ε̃*_{*θ*,1} may be applied to the first region, which is the object region, and *ε̃*_{*θ*,2} may be applied to the second region, which is the background region.

In an embodiment of the disclosure, the electronic device may identify whether the edit prompt 404 describes a foreground (e.g., an object) or a background by analyzing the edit prompt 404. The electronic device may identify an edit intent indicated by the edit prompt 404 by using a natural language processing (NLP) model. For example, the electronic device may identify which region of the image the user is requesting to edit. Specifically, when the edit prompt 404 is "Make it snowy," the electronic device may identify that the edit prompt 404 is intended to edit the background, and set hyperparameters to apply a relatively weak image generation strength to the first region (the object region) and a relatively strong image generation strength to the second region (the background region). When the edit prompt 404 is "Make the dog have a spotted pattern," the electronic device may identify that the edit prompt 404 is intended to edit the foreground, and set hyperparameters to apply a relatively strong image generation strength to the first region (the object region) and a relatively weak image generation strength to the second region (the background region).

In addition, because the predicted noise includes a conditional prediction and an unconditional prediction, the equation above may be rewritten as an equation below. ${{ϵ}^{˜}}_{θ} \left({\hat{z}}_{t}, {c}_{I}, {c}_{T}\right) = α ∗ {{ϵ}^{˜}}_{θ , 1} \left({\hat{z}}_{t}, {c}_{I}, {c}_{T}\right) + \left(1-α\right) ∗ {{ϵ}^{˜}}_{θ , 2} \left({\hat{z}}_{t}, {c}_{I}, {c}_{T}\right)$

A more detailed description of the equation above and a description of the hyperparameters for applying image generation strengths are provided in the description with respect to FIG. 4B.

FIG. 4B is a diagram illustrating an operation in which the electronic device applies different scales to different regions in an image within a single time step.

A process at an arbitrary single time step t, which is one of the reverse diffusion processes over time steps from t=T to t=0 that are included in the inference process of the diffusion model, is described with reference to FIG. 4B.

In an embodiment of the disclosure, the electronic device may handle applying different image generation strengths to different regions at a single time step t.

Referring to FIG. 4B, at a time step t, the image information generator 420 may output conditional and unconditional predictions of noise for latent data *zₜ*. For example, the image information generator 420 may output *ε_{θ}*(*Ẑₜ,* 0̸, 0̸), which is a result of unconditional noise prediction, *ε_{θ}*(*Ẑₜ, c_{I},* 0̸), which is a result of image-conditional noise prediction, and *ε_{θ}*(*Ẑₜ, c_{I}, c_{T}*), which are a result of image- and text-conditional noise prediction.

The CFG module 430 may adjust how strongly the diffusion model reflects conditional information during an image generation process by combining the unconditional prediction and the conditional prediction output from the image information generator 420.

The electronic device may calculate a combination of unconditional prediction and conditional prediction for each region of the image in order to vary image generation strength for different regions of the image . The calculation of the predicted noise for each region is performed by commonly using the unconditional prediction, the image-conditional prediction, and the image-and text-conditional prediction {*ε_{θ}*(ẑ*ₜ,* 0̸, 0̸), *ε_{θ}*(*ẑₜ, c_{I},* 0̸), *ε_{θ}*(*ẑₜ, c_{I}, c_{T}*)} output from the image information generator 420, and is processed within a single time step t.

To apply image generation strengths differently to different regions within a single time step t, the electronic device may use the segmentation map 406 and hyperparameters corresponding to the different regions. The hyperparameters may include, for example, a first hyperparameter indicating a degree to which an image condition is reflected and a second hyperparameter indicating a degree to which a text condition is reflected. A hyperparameter for adjusting a degree of condition reflection may also be referred to as a guidance scale or a CFG scale. The overall predicted noise *ε̃_{θ}*(*ẑₜ, c_{I}, c_{T}*) at time step t, which is obtained by the CFG module 430, is calculated by using an equation below. ${{ϵ}^{˜}}_{θ} \left({\hat{z}}_{t}, {c}_{I}, {c}_{T}\right) = α ∗ {{ϵ}^{˜}}_{θ , 1} \left({\hat{z}}_{t}, {c}_{I}, {c}_{T}\right) + \left(1-α\right) ∗ {{ϵ}^{˜}}_{θ , 2} \left({\hat{z}}_{t}, {c}_{I}, {c}_{T}\right)$

In the equation above, *α* represents the segmentation map 406, *ε̃*_{*θ*,1}(*ẑₜ, c_{I}, c_{T}*) represents first noise predicted for the first region, and *ε̃*_{*θ*,2}(*ẑₜ*, *c_{I}, c_{T}*) represents second noise predicted for the second region. In the example of FIG. 4B, the segmentation map 406 is a result of object segmentation. The first region may correspond to an object region within the segmentation map 406, and the second region may correspond to a background region within the segmentation map 406. In other words, the more likely a pixel is to correspond to an object, the closer the value of the pixel is to 1, and the more likely a pixel is to correspond to a region (e.g., the background) other than the object, the closer the value of the pixel is to 0.

The first noise *ε̃*_{*θ*,1}(*ẑₜ, c_{I}, c_{T}*) is the noise predicted for the first region (e.g., the object region). The first noise is obtained by combining conditional noise and unconditional noise predicted by the image information generator 420, and may be calculated by using an equation below. ${{ϵ}^{˜}}_{θ , 1} \left({\hat{z}}_{t}, {c}_{I}, {c}_{T}\right) = {ϵ}_{θ} \left({\hat{z}}_{t}, ∅, ∅\right) + {s}_{I , 1} \left({ϵ}_{θ}\left({\hat{z}}_{t}, {c}_{I}, ∅\right)-{ϵ}_{θ}\left({\hat{z}}_{t}, ∅, ∅\right)\right) + {s}_{T , 1} \left(\begin{matrix}{ϵ}_{θ} \left({\hat{z}}_{t}, {c}_{I}, {c}_{T}\right) \\ - {ϵ}_{θ} \left({\hat{z}}_{t}, {c}_{I}, ∅\right)\end{matrix}\right)$

In the equation above, *s*_{*I*,1} is a hyperparameter that corresponds to the first region and sets a degree of reflection of the image condition, and *s*_{*T*,1} is a hyperparameter that corresponds to the first region and sets a degree of reflection of the text condition.

In addition, the second noise *ε̃*_{*θ,*2}(*ẑₜ, c_{I}, c_{T}*) is the noise for the second region (e.g., the background region). The second noise is obtained by combining conditional noise and unconditional noise predicted by the image information generator 420, and may be calculated by using an equation below. ${{ϵ}^{˜}}_{θ , 2} \left({\hat{z}}_{t}, {c}_{I}, {c}_{T}\right) = {ϵ}_{θ} \left({\hat{z}}_{t}, ∅, ∅\right) + {s}_{I , 2} \left({ϵ}_{θ}\left({\hat{z}}_{t}, {c}_{I}, ∅\right)-{ϵ}_{θ}\left({\hat{z}}_{t}, ∅, ∅\right)\right) + {s}_{T , 2} \left(\begin{matrix}{ϵ}_{θ} \left({\hat{z}}_{t}, {c}_{I}, {c}_{T}\right) \\ - {ϵ}_{θ} \left({\hat{z}}_{t}, {c}_{I}, ∅\right)\end{matrix}\right)$

In the equation above, *s*_{*I*,2} is a hyperparameter that corresponds to the second region and sets a degree of reflection of the image condition, and *s*_{*T*,2} is a hyperparameter that corresponds to the second region and sets a degree of reflection of the text condition.

The electronic device may remove the predicted noise *ε̃_{θ}*(*ẑₜ, c_{I}, c_{T}*) at time step t from the current latent data *ẑₜ* to thereby obtain latent data *ẑ*_{*t*-1} at the next time step t-1.

The electronic device may obtain the final latent data *ẑ*₀ by repeating noise prediction and noise removal over time steps from t=T to t=0 by using the diffusion model, and obtain a final image that is an edited image by converting the final latent data.

The above-described hyperparameters may each adjust a degree of reflection of a condition (an image condition or a text condition) according to a set value. For example, when a hyperparameter with a low set value (e.g., 1 to 3) is used, an image is generated by referring to a condition, but new elements that do not match the condition may be included in the generated image. When a hyperparameter with an intermediate set value (e.g., 7 to 9) is used, an image with a natural look may be generated while appropriately reflecting the condition. When a hyperparameter with a high set value (e.g., 15) is used, an image that follows the condition very accurately may be generated. For a first hyperparameter indicating a degree of reflection of an image condition, the larger the value, the more the input image is referenced. In other words, this may mean a higher degree of preservation of the input image when an output image is generated. A second hyperparameter indicates a degree of reflection of a text condition. For the second hyperparameter indicating the degree of reflection of the text condition, the larger the value, the more the input text (edit prompt) is referenced. In other words, this may mean a higher degree of change in the input image according to content of the text when the output image is generated.

In an embodiment of the disclosure, a hyperparameter may be a defined parameter that has a preset degree of condition reflection.

For example, an image generation task may support a background editing mode. For the background editing mode, first and second hyperparameters may be defined that allow an edit prompt to be reflected in a background in an image while maintaining the identity of an object in the image.

For example, an image generation task may support an object editing mode. For the object editing mode, first and second hyperparameters may be defined that allow an edit prompt to be reflected in an object in an image while maintaining the identity of a background thereof.

For example, an image generation task may support a free editing mode. For the free editing mode, first and second hyperparameters may be defined that allow at least some regions in an image (e.g., an object region, a background region, etc.) to be edited based on an edit prompt, or allow a plurality of regions in the image to be edited with different strengths. When the free editing mode is selected, the electronic device may determine an edit intent indicated by the edit prompt by applying an NLP model to the edit prompt, and identify one or more regions corresponding to the edit intent in the image.

In an embodiment of the disclosure, a value of a defined hyperparameter may be a changeable value rather than a fixed value. For example, the value of the defined hyperparameter may be changed based on a user input for changing the degree of condition reflection set by the defined hyperparameter. The user input may be in the form of directly specifying a setting value of the hyperparameter, or may be in the form of natural language such as "Modify the background a little more."

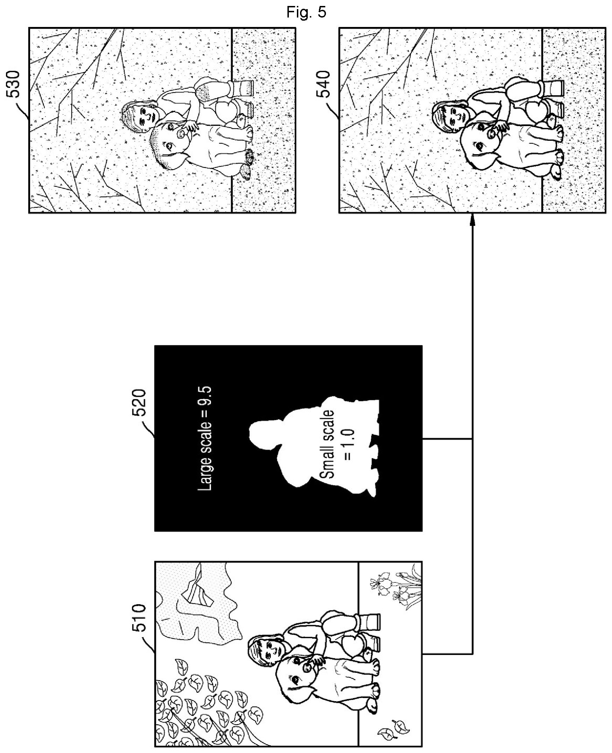

FIG. 5 is a diagram illustrating an electronic device applying different image generation strengths to different regions.

In an embodiment of the disclosure, the electronic device may edit an original image 510. The original image 510 may be edited to correspond to an edit prompt. For example, when the edit prompt is "Make it snowy," the original image 510 may be edited to show snowy weather.

When the electronic device generates an image showing an editing effect by using a diffusion model, different generation strengths may be applied to different regions of the image. Referring to FIG. 5, a first example 530 of an edited image and a second example 540 of an edited image are shown.

The first example 530 of the edited image is an image generated by using a general editing method without applying different generation strengths to different image regions. Specifically, as seen in the first example 530 of the edited image, background weather of the image is edited to snowy weather, and the same image generation strength is applied to a person and a dog that are objects in the image, resulting in snow lying on the dog's head and paws and the person's head, knees, feet, etc.

On the other hand, the second example 540 of the edited image is an image generated by applying different generation strengths to different image regions. Specifically, the background weather of the image is edited to snowy weather, but the person and the dog, which are the objects in the image, may have no or little changes. In other words, in the second example 540 of the edited image, a result that is the same as maintaining the identities of the person and the dog, which are the objects in the original image 510, may be achieved.

The electronic device may apply different generation strengths to different image regions based on a segmentation map 520 and hyperparameters indicating degrees of condition reflection. A hyperparameter representing a degree of condition reflection may also be referred to as a guidance scale or a CFG scale.

Image generation strengths may be determined based on values of defined hyperparameters. The defined hyperparameters may include a first hyperparameter *s_{I}* indicating a degree of reflection of an image condition and a second hyperparameter *s_{T}* indicating a degree of reflection of a text condition. When a plurality of regions in the image are identified, the first hyperparameter and the second hyperparameter may correspond to each of the plurality of regions. For example, for a first region in the image, there may be a first hyperparameter *s*_{*I*,1} and a second hyperparameter *s*_{*T,*1} corresponding to the first region, and for a second region in the image, there may be a first hyperparameter *s*_{*I*,2} and a second hyperparameter *s*_{*T*,2} corresponding to the second region.

Values of hyperparameters corresponding to each region may be different. For example, a value of the first hyperparameter *s*_{*I*,1} corresponding to the first region of the image may be different from a value of the first hyperparameter *s*_{*I*,2} corresponding to the second region of the image. This indicates that different degrees of reflection of the image condition are applied to the first region and the second region. In addition, a value of the second hyperparameter *s*_{*T,*1} corresponding to the first region of the image may be different from a value of the second hyperparameter *s*_{*T*,2} corresponding to the second region of the image. This indicates that different degrees of reflection of the text condition are applied to the first region and the second region.

A first hyperparameter indicates a degree of reflection of an image condition. For the first hyperparameter indicating the degree of reflection of the image condition, the larger the value, the more the input image is referenced. In other words, this may mean a higher degree of preservation of the input image when an output image is generated. A second hyperparameter indicates a degree of reflection of a text condition. For the second hyperparameter indicating the degree of reflection of the text condition, the larger the value, the more the input text (edit prompt) is referenced. In other words, this may mean a higher degree of change in the input image according to content of the text when the output image is generated.

Referring to the segmentation map 520 of FIG. 5, different second hyperparameters are illustrated for different regions in the image for example description. Specifically, an example is illustrated in which the second hyperparameter *s*_{*T,*1} corresponding to the first region (e.g., the object region) has a value of 1.0, and the second hyperparameter *s*_{*T,*2} corresponding to the second region (e.g., the background region) has a value of 9.5. In this case, an edit prompt may be reflected in the first region to a lesser degree than in the second region. An image generated in this example corresponds to the second example 540 of the edited image. Referring to the second example 540 of the edited image of FIG. 5, it can be seen that the snowy weather is reflected in the object region that is the first region to a relatively small degree, and is reflected in the background region that is the second region to a relatively large degree. In other words, the second example 540 of the edited image shows a result of applying different image generation strengths to different regions, as compared to the first example 530 of the edited image, which shows a result of applying the same image generation strength to all regions.

The electronic device may apply different image generation strengths to different regions of the image based on the segmentation map 520 and at least one of the first hyperparameter or the second hyperparameter. For example, the electronic device may apply different degrees of reflection of image conditions to different regions of the image based on the segmentation map 510 and the first hyperparameter. The electronic device may apply different degrees of reflection of the text condition to different regions of the image based on the segmentation map 510 and the second hyperparameter. The electronic device may apply different degrees of reflection of the image condition and the text condition to different regions of the image based on the segmentation map 510 and the first and second hyperparameters.

The application of different generation strengths to different image regions by the electronic device may be processed within a single diffusion process. The specific equation related to the application of different generation strengths has been described above with reference to FIG. 4B, and thus a repeated description is omitted for brevity.

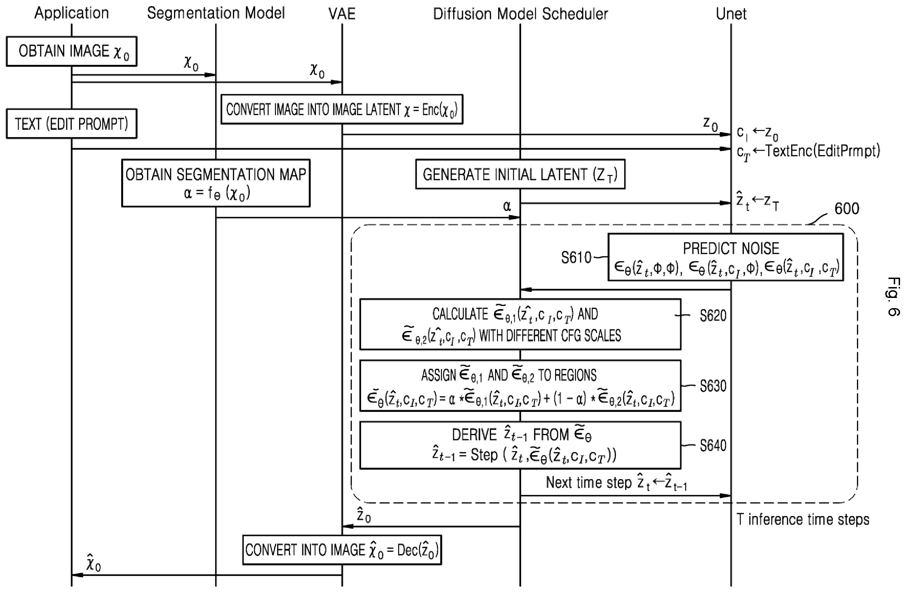

FIG. 6 is a flowchart illustrating an overall process in which an electronic device generates an edited image, according to an embodiment of the disclosure.

In an embodiment of the disclosure, the electronic device may provide an application that provides an image editing function. The application may be implemented in various forms. For example, the application may be a camera application for taking photos and a gallery app for viewing images, with image editing functions, or may be in the form of a separate editing application for editing images. In addition, the electronic device may include various modules (e.g., a segmentation model, a diffusion module, etc.) for providing image editing functions.

The application may perform functions of obtaining an input image and text, and outputting a completed edited image. The electronic device may perform some preprocessing (e.g., resizing) on the input image to make the input image processible by a diffusion model.

The input image may be converted into image latent data by an encoder (e.g., a VAE). Then, a segmentation model may obtain a segmentation map based on the input image. Input text may be converted by a text encoder (e.g., BERT) into text latent data that is in a form capable of being processed by the diffusion model.

To generate an image, the diffusion model may generate initial latent data. The initial latent data may be sampled from a standard normal distribution N(0,1), and a scheduler of the diffusion model may process the task of generating the initial latent data.

An image information generator of the diffusion model may include a neural network (e.g., U-Net) for processing a noise prediction task. The image information generator may start the noise prediction task based on the image latent data, the text latent data, and the initial latent data. The image latent data and the text latent data may be respectively used as an image condition and a text condition.

The diffusion model may perform an image generation task by iteratively performing a diffusion process 600. The diffusion process 600 may include a reverse diffusion process that involves predicting and removing noise at each time step. In the diffusion process 600, noise may be gradually removed over time steps from t=T to t=0.

In operation S610, the diffusion model may predict noise corresponding to a current time step. Noise at a time step t may include unconditional noise prediction and conditional noise prediction. The unconditional noise prediction *ε_{θ}*(*ẑₜ,* 0̸, 0̸) may represent noise predicted only from latent data without any condition, *ε_{θ}*(*ẑₜ, c_{I},* 0̸) in the conditional noise prediction may represent an image-conditional noise prediction, and *ε_{θ}*(*ẑₜ, c_{I}, c_{T}*) in the conditional noise prediction may represent an image-and text-conditional noise prediction.

In operation S620, the diffusion model may calculate combined noise to which different image generation strengths are applied. A value for adjusting the strength of image generation may be referred to as a hyperparameter, a guidance scale, or a CFG scale. A value of a hyperparameter may be a predefined value.

For example, first combined noise may be calculated as follows based on a first hyperparameter-1 *s*_{*I*,1} and a second hyperparameter-1 *s*_{*T,*1}. ${{ϵ}^{˜}}_{θ , 1} \left({\hat{z}}_{t}, {c}_{I}, {c}_{T}\right) = {ϵ}_{θ} \left({\hat{z}}_{t}, ∅, ∅\right) + {s}_{I , 1} \left({ϵ}_{θ}\left({\hat{z}}_{t}, {c}_{I}, ∅\right)-{ϵ}_{θ}\left({\hat{z}}_{t}, ∅, ∅\right)\right) + {s}_{T , 1} \left(\begin{matrix}{ϵ}_{θ} \left({\hat{z}}_{t}, {c}_{I}, {c}_{T}\right) \\ - {ϵ}_{θ} \left({\hat{z}}_{t}, {c}_{I}, ∅\right)\end{matrix}\right)$

Furthermore, for example, second combined noise may be calculated as follows based on a first hyperparameter-2 *s*_{*I*,2} and a second hyperparameter-2 *s*_{*T,*2}. ${{ϵ}^{˜}}_{θ , 2} \left({\hat{z}}_{t}, {c}_{I}, {c}_{T}\right) = {ϵ}_{θ} \left({\hat{z}}_{t}, ∅, ∅\right) + {s}_{I , 2} \left({ϵ}_{θ}\left({\hat{z}}_{t}, {c}_{I}, ∅\right)-{ϵ}_{θ}\left({\hat{z}}_{t}, ∅, ∅\right)\right) + {s}_{T , 2} \left(\begin{matrix}{ϵ}_{θ} \left({\hat{z}}_{t}, {c}_{I}, {c}_{T}\right) \\ - {ϵ}_{θ} \left({\hat{z}}_{t}, {c}_{I}, ∅\right)\end{matrix}\right)$

Here, for the calculation of each of the first combined noise and the second combined noise, the noise predicted in operation S610 is commonly used.

In operation S630, the diffusion model may use the segmentation map to make the first combined noise and the second combined noise correspond to respective regions of the image. For example, when the segmentation map represents a result of object segmentation, pixels in the segmentation map corresponding to an object region in the image may have values close to 1, and pixels in the segmentation map corresponding to a remaining region other than the object region in the image may have values close to 0. When the first combined noise *ε̃*_{*θ*,1}(*ẑₜ, c_{I}, c_{T}*) is applied to the object region, only the pixels corresponding to the object region in the first combined noise may remain by calculating the product *α* * *ε̃*_{*θ,*1}(*ẑₜ, c_{I}, c_{T}*) of the segmentation map and the first combined noise. Also, when the second combined noise *ε̃*_{*θ,*2}(*ẑₜ, c_{I}, c_{T}*) is applied to the remaining region other than the object region, only the pixels corresponding to the remaining region in the second combined noise may remain by calculating the product (1 - *α*) * *ε̃*_{*θ,*2}(*ẑₜ, c_{I}, c_{T}*) of an inverse of the segmentation map and the second combined noise. The final combined noise *ε̃_{θ}*(*ẑₜ, c_{I}, c_{T}*) at the time step t may be calculated as follows. ${{ϵ}^{˜}}_{θ} \left({\hat{z}}_{t}, {c}_{I}, {c}_{T}\right) = α ∗ {{ϵ}^{˜}}_{θ , 1} \left({\hat{z}}_{t}, {c}_{I}, {c}_{T}\right) + \left(1-α\right) ∗ {{ϵ}^{˜}}_{θ , 2} \left({\hat{z}}_{t}, {c}_{I}, {c}_{T}\right)$

In operation S640, the diffusion model may calculate latent data *ẑ*_{*t*-1} at a next time step t-1, based on the final combined noise *ε̃_{θ}* at the time step t and latent data *ẑₜ* at the current time step. ${\hat{z}}_{t - 1} = Step \left({\hat{z}}_{t},{{ϵ}^{˜}}_{θ}\left({\hat{z}}_{t}, {c}_{I}, {c}_{T}\right)\right)$

The above function may be a function representing the prediction of the next state *ẑ*_{*t*-1} based on the current state *ẑₜ* and the predicted noise *ε̃_{θ}*. For example, a diffusion model may proceed to the next state through reverse diffusion that removes the predicted noise from the current state.

The diffusion model may repeat the diffusion process 600 consisting of operations S610 to S640 for T times from t=T to t=0. The diffusion model performs the application of different image generation strengths to different regions within a diffusion process at a single time step. This may reduce the time required for inference by the diffusion model. For example, when the diffusion model does not process a plurality of regions at a single time step when applying different image generation strengths to the different regions, a diffusion process for a first region may be iteratively performed from t=T to t=0, and a diffusion process for a second region may be iteratively performed from t=T to t=0, requiring a total of 2T iterations. Furthermore, when the number of the plurality of regions is M, M*T iterations are required. According to the diffusion process 600 of the disclosure, even when there are M plurality of regions, only T iterations are required because the M regions are processed within a diffusion process at a single time step, and thus, the processing time may be reduced.

The final latent data *ẑ*₀ obtained by the diffusion model may be converted into an edited image, which is a final image, by the decoder (VAE). The edited image may be displayed on a screen of the electronic device via an application, etc., and provided to the user.

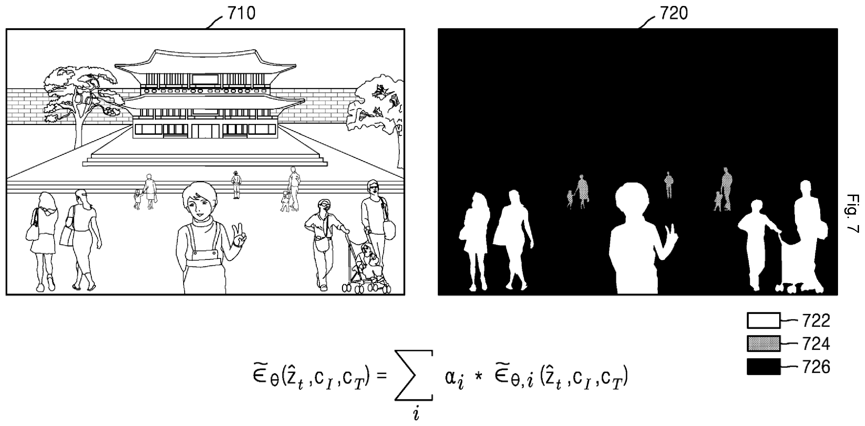

FIG. 7 is a diagram illustrating an electronic device editing an image by applying different image generation strengths to a plurality of levels, according to an embodiment of the disclosure.

In an embodiment of the disclosure, the electronic device may obtain a segmentation map 720 including a plurality of segment levels based on an image 710. Based on the segmentation map 720 including a plurality of segment levels, the electronic device may apply different image generation strengths to image regions each corresponding to a segment at each level. In describing FIG. 7, an example in which the segmentation map 720 includes a first level 722, a second level 724, and a third level 726 is illustrated. However, this is only an example, and the segmentation map 720 may include more or fewer levels than those illustrated in FIG. 7. The electronic device may obtain the segmentation map 720 including the plurality of levels by detecting the plurality of levels in the image 710, or by obtaining segmentation maps respectively corresponding to the plurality of levels and then combining together the obtained segmentation maps.

Referring to the image 710, objects of various depths may exist within the image 710. In a situation where the objects of various depths exist within the image 710, there may be objects that are neither in a foreground nor in a background. The electronic device may apply different image generation strengths to objects of various depths as well as the foreground and background.

The electronic device may process the application of different image generation strengths to different regions at a single time step t during an inference process using the diffusion model. A diffusion process included in the inference process may be performed iteratively over time steps from t=T to t=0. To apply image generation strengths differently to different regions within the single time step t, the electronic device may use the segmentation map 720 and hyperparameters corresponding to the different regions. In this case, predicted combined noise *ε̃_{θ}*(*ẑₜ, c_{I}, c_{T}*) at the time step t is obtained by using an equation below. ${{ϵ}^{˜}}_{θ} \left({\hat{z}}_{t}, {c}_{I}, {c}_{T}\right) = {\sum }_{i} {α}_{i} ∗ {{ϵ}^{˜}}_{θ , i} \left({\hat{z}}_{t}, {c}_{I}, {c}_{T}\right)$

In the equation above, *αᵢ* denotes a segmentation map representing an i-th region, and *ε̃_{θ,i}*(*ẑₜ, c_{I}, c_{T}*) denotes predicted noise corresponding to region *αᵢ*. Because the predicted combined noise *ε̃_{θ,i}*(*ẑₜ, c_{I}, c_{T}*) has been described above with reference to the previous drawings, a repeated description thereof is omitted for brevity.

In the example of FIG. 7 showing the first level 722, the second level 724, and the third level 726, predicted combined noise at each time step is obtained by using an equation below. ${{ϵ}^{˜}}_{θ} \left({\hat{z}}_{t}, {c}_{I}, {c}_{T}\right) = {α}_{1} ∗ {{ϵ}^{˜}}_{θ , 1} \left({\hat{z}}_{t}, {c}_{I}, {c}_{T}\right) + {α}_{2} ∗ {{ϵ}^{˜}}_{θ , 2} \left({\hat{z}}_{t}, {c}_{I}, {c}_{T}\right) + {α}_{3} ∗ {{ϵ}^{˜}}_{θ , 3} \left({\hat{z}}_{t}, {c}_{I}, {c}_{T}\right)$

The equation above indicates that a first image generation strength is applied to a region corresponding to the first level 722, a second image generation strength is applied to a region corresponding to the second level 724, and a third image generation strength is applied to a region corresponding to the third level 726.

In an embodiment of the disclosure, the electronic device may obtain a plurality of segmentation maps and use the plurality of segmentation maps. For example, the electronic device may obtain a segmentation map *α*₁ including region information about the first level 722, a segmentation map *α*₂ including region information about the second level 724, and a segmentation map *α*₃ including region information about the third level 726, and apply different image generation strengths to the plurality of regions in the image based on the respective segmentation maps.

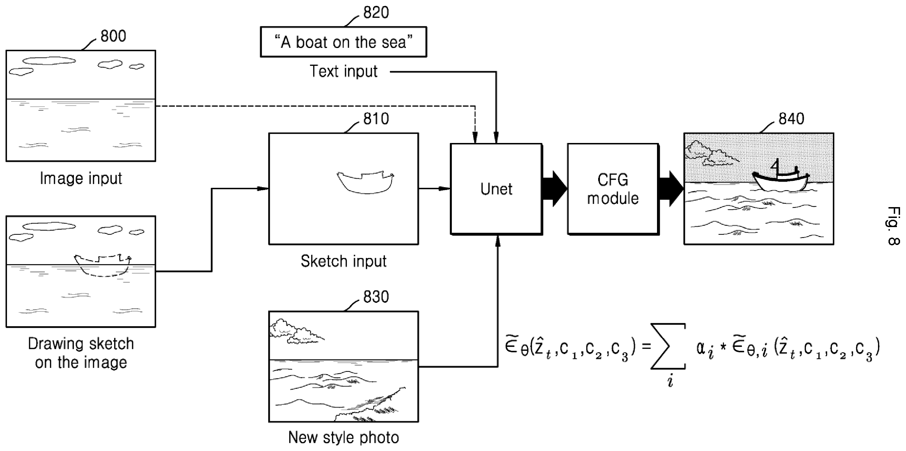

FIG. 8 is a diagram illustrating an electronic device editing an image by imposing a plurality of conditions.

In an embodiment of the disclosure, the electronic device may generate an image by applying different image generation strengths to a plurality of regions based on a plurality of inputs. Each of the plurality of inputs may be applied as a "condition", which is data that a diffusion model refers to in generating an image. The plurality of conditions may be images or text, or may be other types of conditions. For example, although the above-described embodiments are described with respect to an example in which only an image condition *c_{I}* and a text condition *c_{T}* exist as conditions, there may be three or more conditions.

In an embodiment of the disclosure, in a diffusion process that is iteratively performed over time steps from t=T to t=0, different image generation strengths may be applied to different regions within a single time step t based on three conditions. An image information generator (e.g., U-Net) may output an unconditional prediction and a conditional prediction reflecting at least one of the conditions, and a CFG module may combine the unconditional prediction and the conditional prediction reflecting the at least one of the conditions. This may be expressed via an equation below. ${{ϵ}^{˜}}_{θ} \left({\hat{z}}_{t}, {c}_{1}, {c}_{2}, {c}_{3}\right) = {\sum }_{i} {α}_{i} ∗ {{ϵ}^{˜}}_{θ , i} \left({\hat{z}}_{t}, {c}_{1}, {c}_{2}, {c}_{3}\right)$

In the equation above, *c*₁, *c*₂, *c*₃ represent three different conditions. In the equation above, *αᵢ* denotes a segmentation map representing an i-th region, and *ε̃_{θ,i}*(*ẑₜ, c*₁, *c*₂, *c*₃) denotes predicted noise corresponding to region *αᵢ*. A calculation method for *ε̃_{θ,i}*(*ẑₜ, c*₁, *c*₂, *c*₃) may be applied by being inferred from the calculation method for *ε̃_{θ,i}*(*ẑₜ, c_{I}, c_{T}*) described with reference to the previous drawings, and therefore, a repeated description thereof is omitted for brevity.

While generating an image reflecting the conditions *c*₁,*c*₂,*c*₃, the diffusion model may apply different image generation strengths to different regions within the image based on the segmentation map and hyperparameters representing the degree of reflection of the conditions. Applying different image strengths to different regions may be processed within a single time step.

Referring to the example of FIG. 8, the diffusion model may take a sketch input 810, a text input 820, and a new style photo 830 as input data. The sketch input 810 may be obtained based on a user input for an image 800. In this case, the inputs 810, 820, and 830 may respectively undergo predetermined conversion operations (e.g., encoding) to become conditions *c*₁, *c*₂, *c*₃ that are referenced in a diffusion process. As a result of the diffusion model generating an image by reflecting the conditions, an edited image 840 may include objects corresponding to the sketch input 810 and the text input 820, and represent a result of reflecting a style of the new style photo 830.

Moreover, although FIG. 8 illustrates the example in which the three conditions are used, the number of the plurality of conditions is not limited to three. The conditions may be more than three. For example, as shown in FIG. 8, the image 800 may be used as additional input data. In this case, the image 800 may undergo a predetermined conversion operation (e.g., encoding) to become a fourth condition *c*₄ referenced in the diffusion process.

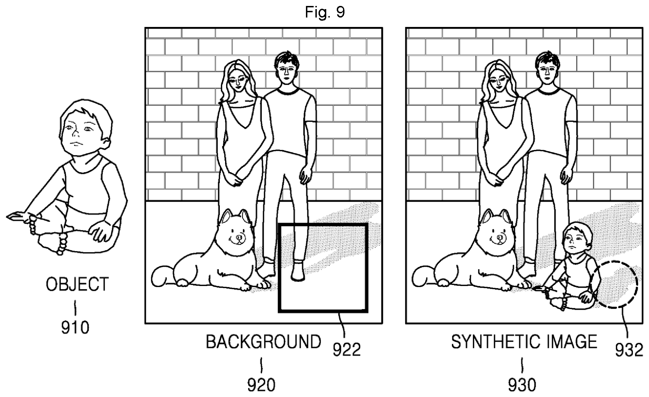

FIG. 9 is a diagram illustrating an electronic device generating an image by using a diffusion model, according to an embodiment of the disclosure.

In an embodiment of the disclosure, the electronic device may generate a natural-looking synthetic image by applying different generation strengths to different regions of an image.

For example, the electronic device may generate a synthetic image 930 by synthesizing an object image 910 and a background image 920 using a diffusion model. The synthetic image 930 may include a new graphic effect that represents a natural synthesis result. For example, the synthetic image 930 may include a shadow 923 of a synthesized object.

In the example of FIG. 9, the number of a plurality of regions to which different image generation strengths are applied is three. For example, relative to a region 922 where the object is to be synthesized, a background region, which is an external region, may be a first region. Furthermore, within the region 922 where the object is to be synthesized, a region corresponding to the object may be a second region. In addition, within the region 922 where the object is to be synthesized, a remaining region other than the second region, which is the region corresponding to the object, may be a third region.

In an embodiment of the disclosure, the electronic device may obtain a segmentation map to distinguish a plurality of regions. For example, the region 922 where the object is to be synthesized may be determined based on a user input. The region 922 where the object is to be synthesized may be automatically determined based on analysis of the background image 920 (e.g., object recognition, object detection, etc.). The electronic device may generate a segmentation map corresponding to the first region, which represents information about the region other than the region 922 where the object is to be synthesized. The electronic device may obtain a segmentation map corresponding to the second region, which represents region information of the object within the region 922 where the object is to be synthesized. In addition, the electronic device may generate a segmentation map corresponding to the third region, which represents region information of the remaining region other than the first region and the second region.

In the example of FIG. 9, while the identities of the background and the object in the original image are respectively maintained for the first and second regions, a relatively strong image generation strength needs to be applied to the third region for a natural synthesis result. In this case, the electronic device may apply a higher image generation strength to the third region than to the first region and the second region. The application of different image generation strengths to a plurality of regions by the electronic device may be processed together within each time step included in an inference process of the diffusion model. In this case, the predicted combined noise at time step t is obtained by using an equation below. ${{ϵ}^{˜}}_{θ} \left({\hat{z}}_{t}, {c}_{I 1}, {c}_{I 2}\right) = {\sum }_{i} {α}_{i} ∗ {{ϵ}^{˜}}_{θ , i} \left({\hat{z}}_{t}, {c}_{I 1}, {c}_{I 2}\right)$

In the equation above, *c*_{*I*1} represents a first image condition (e.g., the object image 910), and *c*_{*I*2} represents a second image condition (e.g., the background image 920). *αᵢ* represents an i-th region (e.g., the first region, the second region, and the third region). An image generation strength for each region may be adjusted by defined hyperparameter indicating the degree of condition reflection.

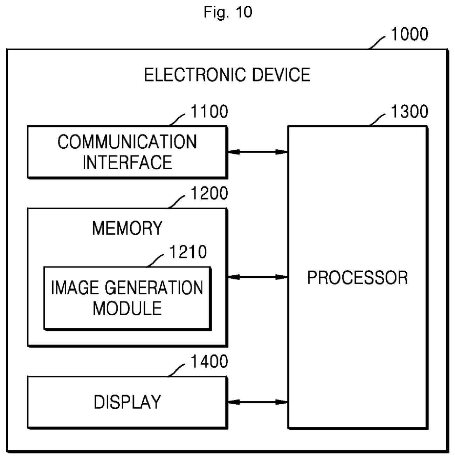

FIG. 10 is a block diagram of a configuration of an electronic device according to an embodiment of the disclosure.

In an embodiment of the disclosure, an electronic device 1000 may include a communication interface 1100, a memory 1200 a processor 1300, and a display 1400.

The communication interface 1100 may perform data communication with other electronic devices according to control by the processor 1300. The communication interface 1100 may include a communication circuit.

The communication interface 1100 is capable of performing data communication between the electronic device 1000 and another electronic device (e.g., a server 2000) by using at least one of data communication methods including, for example, wired local area network (LAN) (e.g., Ethernet), wireless LAN (e.g., Wi-Fi), cellular networks (4th generation (4G), 5th generation (5G), etc.) Bluetooth, Bluetooth Low Energy (BLE), ZigBee, Infrared Data Association (IrDA), near field communication (NFC), radio frequency (RF) communication, and various other types of known wireless/wired communication technologies.

The electronic device 1000 may transmit and receive data for generating an edited image to and from another electronic device (e.g., the server 2000) by using the communication interface 1100. For example, the electronic device 1000 may transmit and receive input data (e.g., an image, text, etc.) for a diffusion model and/or output data (e.g., an edited image) for the diffusion model to and from another electronic device, and may receive a diffusion model for image editing from the other electronic device.

The memory 1200 may include various types of memory. The memory 1200 may include non-volatile memory, including at least one of a flash memory-type memory, a hard disk-type memory, a multimedia card micro-type memory, a card-type memory (e.g., a Secure Digital (SD) or eXtreme Digital (XD) memory, etc.), read-only memory (ROM), electrically erasable programmable ROM (EEPROM), PROM, magnetic memory, magnetic disk, or optical disk, and volatile memory such as random access memory (RAM) or static RAM (SRAM).

The memory 1200 may store instruction(s) and/or program(s) that cause the electronic device 1000 to operate to generate and edit images. For example, the memory 1200 may store instructions and programs for implementing functions of an image generation module 1210. Moreover, a module stored in the memory 1200 is for convenience of description and is not necessarily limited to that shown in FIG. 10. Other modules may be added to implement the above-described embodiments, and a single module may be subdivided into a plurality of modules distinguished according to its detailed functions.

The processor 1300 may control all operations of the electronic device 1000. The processor 1300 may include processing circuitry. For example, the processor 1300 may execute one or more instructions of a program stored in the memory 1200 to control all operations of the electronic device 1000 for editing an image. The processor 1300 may be configured as one or more processors.

For example, the processor 1300 may consist of, but is not limited to, at least one of a central processing unit (CPU), a microprocessor, a graphics processing unit (GPU), application-specific integrated circuits (ASICs), digital signal processors (DSPs), digital signal processing devices (DSPDs), programmable logic devices (PLDs), field programmable gate arrays (FPGAs), an application processor (AP), a neural processing unit (NPU), or a dedicated AI processor designed with a hardware structure specialized for processing AI models.

The processor 1300 may execute the image generation module 1210 to generate an edit image. The image generation module 1210 may include a diffusion model. The diffusion model may be a data file that includes model structure information defining the architecture of an encoder, a decoder, an image generator, etc., and weights and parameters. The image generation module 1210 may include a preprocessing module for preprocessing input data, a segmentation module for identifying regions within an image, a CFG module for adjusting an image generation strength, etc. Because operations, performed by the image generation module 1210, for generating an image by using the diffusion model have already been described with reference to the previous drawings, repeated descriptions thereof are omitted herein.

When the processor 1300 is configured as one or more processors, the operations according to the disclosure may be performed by the one or more processors individually or collectively executing instructions and/or programs stored in the memory 1200. When a method according to an embodiment of the disclosure includes a plurality of operations, the plurality of operations may be performed by the one processor 1300 or the plurality of processors 1300.

For example, when a first operation, a second operation, and a third operation are performed according to a method of an embodiment of the disclosure, the first operation, the second operation, and the third operation may all be performed by a first processor, or some of the first to third operations may be performed by the first processor (e.g., a general-purpose processor) while the remaining operations may be performed by a second processor (e.g., a dedicated AI processor). Here, the dedicated AI processor, which is an example of the second processor, may perform computations for training/inference of AI models. However, an embodiment of the disclosure is not limited thereto.

The one or more processors according to the disclosure may be implemented as a single-core processor or as a multi-core processor. When a method according to an embodiment of the disclosure includes a plurality of operations, the plurality of operations may be performed by a single core, or may be performed by a plurality of cores included in the one or more processors.

The display 1400 may output an image signal onto a screen of the electronic device 1000 according to control by the processor 1300. For example, the display 1400 may output, onto the screen, image signals that are processed in the process of the electronic device 1000 providing an edited image, such as an image list for selecting an input image, an image search result, a selected image, an input field for entering input text, a result of image generation, etc. The display 1400 may include a touch panel. The touch panel may include one or more touch sensors for detecting touch input. In an embodiment, a user input associated with an image editing task may be obtained via a touch panel.

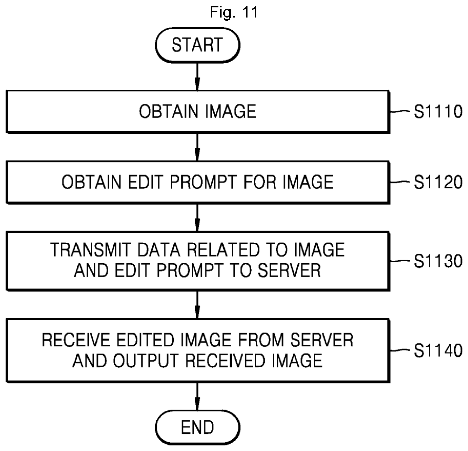

FIG. 11 is a flowchart illustrating an electronic device operating in conjunction with a server, according to an embodiment of the disclosure.

In an embodiment of the disclosure, the electronic device 1000 may operate using a cloud-based AI approach which involves receiving a synthetic image from a diffusion model running on the server 2000 rather than generating a synthetic image by running the diffusion model on-device.

Operations S1110 and S1120 of FIG. 11 may respectively correspond to operations S210 and S220 of FIG. 2. Therefore, repeated descriptions thereof are omitted for brevity.

In operation S1130, the electronic device 1000 may transmit data related to the image and the edit prompt to the server 2000. The electronic device 1000 operates as a client device for the server 2000, and the user may use the electronic device 1000 to access services provided by the server 2000.

The server 2000 may generate an edited image based on the image and the edit prompt by using a diffusion model. A process by which the server 2000 generates the edited image by using the diffusion model corresponds to the operation of the electronic device 1000 described above, and therefore, a repeated description thereof is omitted.

In operation S1140, the electronic device 1000 may receive the edited image from the server 2000 and output the received edited image. The electronic device 1000 may display the edited image on a screen via a display included in the electronic device 1000. The electronic device 1000 may transmit the edited image to another electronic device including a display. The other electronic device that receives the edited image transmitted from the electronic device 1000 may display the edited image on a screen.

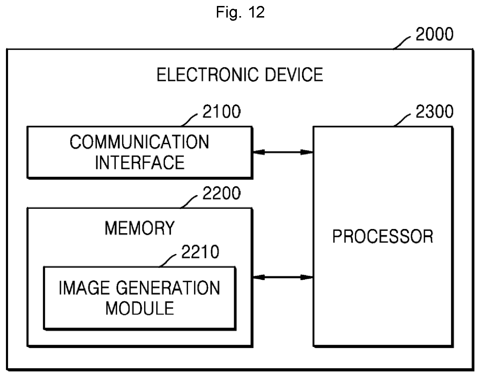

FIG. 12 is a block diagram of a configuration of a server according to an embodiment of the disclosure.

In an embodiment of the disclosure, the server 2000 may include a communication interface 2100, a memory 2200, and a processor 2300. The operations of the electronic device 1000 described above with reference to the previous drawings may be performed by the server 2000. The server 2000 may be a computing device including hardware elements with higher performance specifications than the electronic device 1000 and capable of performing complex calculations and tasks using large-scale data, such as training, inference, management, distribution, and operation of a diffusion model.

Functions of the communication interface 2100, the memory 2200, and the processor 2300 of the server 2000 of FIG. 12 may respectively correspond to the functions described with respect to the communication interface 1100, the memory 1200, and the processor 1300 of the electronic device 1000 of FIG. 10. Therefore, repeated descriptions thereof are omitted for brevity.

The disclosure relates to a method, an electronic device, and a server for generating an edited image by using a diffusion model and providing the edited image. The electronic device may apply different image generation strengths to a plurality of regions in an image by using the diffusion model. The electronic device and/or the server may process the application of different image generation strengths to the plurality of regions in the image within a single diffusion process.

The technical solutions to be achieved in the disclosure are not limited to those described above, and other technical solutions not described will be clearly understood by one of ordinary skill in the art from the description herein.

According to an aspect of the disclosure, a method, performed by an electronic device, of editing an image may be provided.

The method may include obtaining an image.

The method may include obtaining an edit prompt for the image.

The method may include generating an edited image by using a diffusion model that takes the image and the edit prompt as input data.

The method may include outputting the edited image.

The generating of the edited image may include applying different image generation strengths to a plurality of regions in the image, based on a segmentation map representing the plurality of regions.

The image generation strengths may be determined based on values of defined hyperparameters.

The defined hyperparameters may include a first hyperparameter indicating a degree to which an image condition is reflected and a second hyperparameter indicating a degree to which a text condition is reflected.

The first hyperparameter and the second hyperparameter may correspond to each of the plurality of regions, and the first hyperparameter and the second hyperparameter may have different values for each of the plurality of regions.

The generating of the edited image may include obtaining the segmentation map by segmenting an object region within the image.

The generating of the edited image may include identifying the plurality of regions by using the segmentation map.

The segmentation map may include a plurality of segment levels.

The generating of the edited image may include applying different image generation strengths to the plurality of segment levels.

The generating of the edited image may include generating initial noise.

The generating of the edited image may include generating the edited image by repeating a noise prediction process and predicted noise removal for each time step, starting from the initial noise.

The noise prediction process may use CFG which combines conditional prediction and unconditional prediction.

Conditions for the CFG may include an image condition with the image as a condition and a text condition with the edit prompt as a condition.

The noise prediction process may include predicting first noise corresponding to a first region of the image and second noise corresponding to a second region of the image.

The noise prediction process may include, for each single time step, predicting the first noise and the second noise together within the corresponding single time step, and predicting noise corresponding to the single time step by combining the first noise with the second noise.

The generating of the edited image may include further using third input data as the input data for the diffusion model.

The noise prediction process may include, for each single time step, predicting noise corresponding to the single time step by further combining third noise corresponding to the third input data.

The edited image may be generated such that the edit prompt is reflected less in an object region of the edited image than in a remaining region thereof.

According to an aspect of the disclosure, an electronic device for editing an image may be provided.

The electronic device may include a communication interface, at least one processor, and a memory storing instructions.

The instructions, when executed by the at least one processor, may cause the electronic device to obtain an image.

The instructions, when executed by the at least one processor, may cause the electronic device to obtain an edit prompt for the image.

The instructions, when executed by the at least one processor, may cause the electronic device to generate an edited image by using a diffusion model that takes the image and the edit prompt as input data.

The instructions, when executed by the at least one processor, may cause the electronic device to output the edited image.

The generating of the edited image may include applying different image generation strengths to a plurality of regions in the image, based on a segmentation map representing the plurality of regions.

The electronic device may include a display.

The instructions, when executed by the at least one processor, may cause the electronic device to control the display to display the edited image.

The image generation strengths may be determined based on values of defined hyperparameters.

The defined hyperparameters may include a first hyperparameter indicating a degree to which an image condition is reflected and a second hyperparameter indicating a degree to which a text condition is reflected.

The first hyperparameter and the second hyperparameter may correspond to each of the plurality of regions, and the first hyperparameter and the second hyperparameter may have different values for each of the plurality of regions.

The instructions, when executed by the at least one processor, may cause the electronic device to obtain the segmentation map by segmenting an object region within the image.

The instructions, when executed by the at least one processor, may cause the electronic device to identify the plurality of regions by using the segmentation map.

The segmentation map may include a plurality of segment levels.

The instructions, when executed by the at least one processor, may cause the electronic device to apply different image generation strengths to the plurality of segment levels.

The instructions, when executed by the at least one processor, may cause the electronic device to generate initial noise.

The instructions, when executed by the at least one processor, may cause the electronic device to generate the edited image by repeating a noise prediction process and predicted noise removal for each time step, starting from the initial noise.

The noise prediction process may use CFG which combines conditional prediction and unconditional prediction.

Conditions for the CFG may include an image condition with the image as a condition and a text condition with the edit prompt as a condition.

The noise prediction process may include predicting first noise corresponding to a first region of the image and second noise corresponding to a second region of the image.

The noise prediction process may include, for each single time step, predicting the first noise and the second noise together within the corresponding single time step, and predicting noise corresponding to the single time step by combining the first noise with the second noise.

The instructions, when executed by the at least one processor, may cause the electronic device to further use third input data as the input data for the diffusion model.

The noise prediction process may include, for each single time step, predicting noise corresponding to the single time step by further combining third noise corresponding to the third input data.

The edited image may be generated such that the edit prompt is reflected less in an object region of the edited image than in a remaining region thereof.

Moreover, embodiments of the disclosure may be implemented in the form of recording media including instructions executable by a computer, such as a program module executed by the computer. The computer-readable recording media may be any available media that are accessible by a computer, and include both volatile and nonvolatile media and both removable and non-removable media. Furthermore, the computer-readable recording media may include computer storage media and communication media. The computer storage media include both volatile and nonvolatile and both removable and non-removable media implemented using any method or technology for storage of information such as computer-readable instructions, data structures, program modules, or other data. The communication media typically embody computer-readable instructions, data structures, program modules, or other data in a modulated data signal.

A computer-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment of the disclosure, methods according to the embodiments of the disclosure may be included in a computer program product when provided. The computer program product may be traded, as a product, between a seller and a buyer. The computer program product may be distributed in the form of a machine-readable storage medium (e.g., compact disc ROM (CD-ROM)) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

The above description of the disclosure is provided for illustration, and it will be understood by those of ordinary skill in the art that changes in form and details may be readily made therein without departing from technical idea or essential features of the disclosure. Accordingly, the above-described embodiments of the disclosure and all aspects thereof are merely examples and are not limiting. For example, each component defined as an integrated component may be implemented in a distributed fashion, and likewise, components defined as separate components may be implemented in an integrated form.

The scope of the disclosure is defined not by the detailed description thereof but by the following claims, and all the changes or modifications within the meaning and scope of the appended claims and their equivalents will be construed as being included in the scope of the disclosure.

## Claims

1. A method, performed by an electronic device, of editing an image, the method comprising:
obtaining an image;
obtaining an edit prompt for the image;
generating an edited image by using a diffusion model that uses the image and the edit prompt as input data; and
outputting the edited image,
wherein the generating of the edited image comprises applying different image generation strengths to a plurality of regions in the image, based on a segmentation map representing the plurality of regions.

2. The method of claim 1,
wherein the different image generation strengths are determined based on values of defined hyperparameters, and
wherein the defined hyperparameters comprise a first hyperparameter indicating a degree to which an image condition is reflected and a second hyperparameter indicating a degree to which a text condition is reflected.

3. The method of claim 2, wherein the first hyperparameter and the second hyperparameter correspond to each region of the plurality of regions, and the first hyperparameter and the second hyperparameter have different values for each region of the plurality of regions.

4. The method of claim 1,
wherein the generating of the edited image comprises:
obtaining the segmentation map by segmenting an object region within the image; and
identifying the plurality of regions by using the segmentation map.

5. The method of claim 1,
wherein the generating of the edited image comprises:
generating an initial noise; and
generating the edited image by repeating a noise prediction process and a predicted noise removal for each time step, starting from the initial noise,
wherein the noise prediction process uses classifier-free guidance (CFG) that combines conditional prediction and unconditional prediction, and
wherein conditions for the CFG comprise an image condition with the image as a condition and a text condition with the edit prompt as a condition.

6. The method of claim 5, wherein the noise prediction process comprises predicting a first noise corresponding to a first region of the image and a second noise corresponding to a second region of the image.

7. The method of claim 6, wherein the noise prediction process comprises, for each single time step, predicting the first noise and the second noise together within the corresponding single time step, and predicting noise corresponding to the single time step by combining the first noise with the second noise.

8. An electronic device for editing an image, the electronic device comprising:
a communication interface;
at least one processor; and
a memory storing instructions,
wherein the instructions, when executed by the at least one processor, are configured to cause the electronic device to:
obtain an image,
obtain an edit prompt for the image,
generate an edited image by using a diffusion model that takes the image and the edit prompt as input data, and
output the edited image,
wherein the generating of the edited image comprises applying different image generation strengths to a plurality of regions in the image, based on a segmentation map representing the plurality of regions.

9. The electronic device of claim 8,
wherein the different image generation strengths are determined based on values of defined hyperparameters, and
wherein the defined hyperparameters comprise a first hyperparameter indicating a degree to which an image condition is reflected and a second hyperparameter indicating a degree to which a text condition is reflected.

10. The electronic device of claim 9, wherein the first hyperparameter and the second hyperparameter correspond to each region of the plurality of regions, and the first hyperparameter and the second hyperparameter have different values for each region of the plurality of regions.

11. The electronic device of claim 8,
wherein the instructions, when executed by the at least one processor, are further configured to cause the electronic device to:
obtain the segmentation map by segmenting an object region within the image, and
identify the plurality of regions by using the segmentation map.

12. The electronic device of claim 8,
wherein the instructions, when executed by the at least one processor, are further configured to cause the electronic device to
generate an initial noise, and
generate the edited image by repeating a noise prediction process and predicted noise removal for each time step, starting from the initial noise,
wherein the noise prediction process uses classifier-free guidance (CFG) which combines conditional prediction and unconditional prediction, and
wherein conditions for the CFG comprise an image condition with the image as a condition and a text condition with the edit prompt as a condition.

13. The electronic device of claim 12, wherein the noise prediction process comprises predicting a first noise corresponding to a first region of the image and a second noise corresponding to a second region of the image.

14. The electronic device of claim 13, wherein the noise prediction process comprises, for each single time step, predicting the first noise and the second noise together within the corresponding single time step, and predicting noise corresponding to the single time step by combining the first noise with the second noise.

15. A computer-readable recording medium having recorded thereon a program for executing the method of any one of claims 1 to 7 on a computer.
